# FASCICULE DE BREVET EUROPEEN

(11) **EP 0 535 662 B1**
(45) Date de publication et mention de la délivrance du brevet: **20.11.1996**
(21) Numéro de dépôt: 92116786.2
(22) Date de dépôt: 30.09.1992
(51) Int. Cl.: B60S 1/48

(54) **Procédé et dispositif de nettoyage d'une glace de véhicule automobile**
Verfahren und Vorrichtung zum Reinigen einer Kraftfahrzeugscheibe
Method and apparatus for cleaning of a vehicle window

(30) Priorité: 30.09.1991 FR 9111987
(43) Date de publication de la demande: 07.04.1993
(73) Titulaire: VALEO SYSTEMES D'ESSUYAGE, 78180 Montigny-Le-Bretonneux (FR)
(72) Inventeur: Juran, Francois, F-92140 Clamart (FR)
(74) Mandataire: Gamonal, Didier

(56) Documents cités:
- BE-A- 750 858
- DE-A- 2 062 720
- DE-A- 3 108 880
- DE-A- 3 803 491
- PATENT ABSTRACTS OF JAPAN vol. 016, no. 282 (M-1269)23 Juin 1992 & JP-A-04 071 950 ( ASMO CO LTD ) 6 Mars 1992

## Description

L'invention concerne le nettoyage des glaces de véhicule automobile et plus précisément les dispositifs lave-glace équipant les véhicules.

Un tel dispositif comprend habituellement un réservoir de liquide, une pompe aspirante et au moins une buse d'aspersion disposée à proximité de la glace, par exemple sur la carrosserie du véhicule, la mise en service de la pompe provoquant le prélèvement de liquide du réservoir et sa projection sur la glace par la buse.

Le réservoir est normalement garni d'une solution de nettoyage appropriée. Cependant, lorsqu'il vient à se vider, l'utilisateur ne dispose généralement pas d'une réserve de liquide pour le recharger et être alors amené, soit à mettre dans le réservoir un liquide quelconque inapproprié, par exemple de l'eau ne contenant aucun agent de nettoyage, soit à laisser le réservoir vide jusqu'à l'intervention d'un garagiste. Dans le premier cas l'action du dispositif lave-glace est détériorée ; dans le second cas elle est entièrement supprimée.

Le but de l'invention est de remédier à cet inconvénient, et de permettre à l'utilisateur de maintenir facilement le dispositif lave-glace en état de fonctionnement correct.

L'invention vise un dispositif de nettoyage d'une glace de véhicule automobile comprenant au moins une cartouche jetable de liquide nettoyant concentré, un réservoir de liquide porteur, au moins un orifice d'aspersion relié à la cartouche et au réservoir par des conduites, et des moyens de prélèvement pour prélever le liquide nettoyant concentré d'une cartouche et le liquide porteur du réservoir, pour les mélanger et pour amener le mélange à l'orifice d'aspersion, caractérisé en ce que les moyens de prélèvement comprennent une pompe aspirante, un tube de venturi disposés en série entre le réservoir et l'orifice d'aspersion, et une buse latérale reliant la cartouche au tube de venturi.

Un mélangeur statique est avantageusement disposé dans le tube de venturi en aval de la buse latérale.

D'autres caractéristiques et avantages de l'invention ressortiront de la description détaillée ci-après et des dessins annexés dans lesquels :
- la figure 1 représente schématiquement une forme de réalisation du dispositif selon l'invention ;
- la figure 2 représente un détail du dispositif de la figure 1 ; et
Le dispositif illustré schématiquement à la figure 1 comprend un réservoir de liquide 1, une pompe aspirante 2 reliée au réservoir 1 par une conduite 3, et une buse d'aspersion 4, montée ici sur la carrosserie du véhicule, reliée à la pompe par une conduite 5.

Ces composants sont tout à fait semblables à ceux d'un dispositif de lave-glace classique, dans lequel le réservoir 1 est garni d'une solution de nettoyage qui est amenée telle quelle à la buse 4, sous l'action de la pompe 2, à travers les conduites 3 et 5.

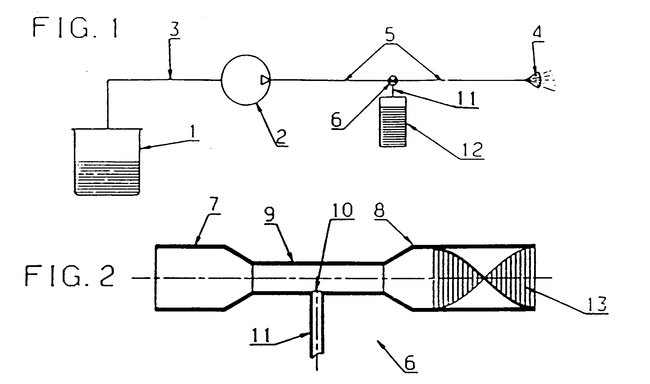

Selon l'invention, un tube de venturi 6 est monté dans la conduite 5, entre la pompe 2 et la buse 4. Comme le montre la figure 2, le tube de venturi comprend une région d'entrée 7 et une région de sortie 8, reliées respectivement à la pompe 2 et la buse 4 par la conduite 5, et une région intermédiaire 9 de section transversale plus faible que les régions 7 et 8. Dans cette région intermédiaire s'ouvre une buse latérale 10 qui est reliée par une conduite 11 à une cartouche jetable 12 contenant un liquide nettoyant concentré, tandis que le réservoir rechargeable 1 contient un liquide porteur n'ayant en lui-même aucune action nettoyante. Lorsque la pompe 2 fonctionne, le liquide contenu dans le réservoir 1 est aspiré et s'écoule le long du tube de venturi 6. La région étranglée 9 de celui-ci provoque à son tour l'aspiration du liquide concentré de la cartouche 12 qui débouche dans le tube par la buse 10 et se mélange au liquide porteur. Une bande vrillée 13 disposée dans la région 8 joue le rôle de mélangeur statique et améliore l'homogénéité du mélange qui est envoyé à la buse d'aspersion 4.

Le dispositif des figures 1 et 2 peut être modifié en prévoyant plusieurs cartouches 12 reliées par des conduites respectives 11 à différentes buses latérales disposées par exemple dans un même plan perpendiculaire à l'axe longitudinal du tube de venturi, en différents points de la circonférence de la région étranglée 9, et/ou plusieurs buses d'aspersion 4.

## Revendications

1. Dispositif de nettoyage d'une glace de véhicule automobile comprenant au moins une cartouche jetable (12) de liquide nettoyant concentré, un réservoir de liquide porteur (1), au moins un orifice d'aspersion (4) relié à la cartouche et au réservoir par des conduites (3,5), et des moyens de prélèvement (2,6) pour prélever le liquide nettoyant concentré d'une cartouche et le liquide porteur du réservoir, pour les mélanger et pour amener le mélange à l'orifice d'aspersion, caractérisé en ce que les moyens de prélèvement comprennent une pompe aspirante (2), un tube de venturi (6) disposés en série entre le réservoir et l'orifice d'aspersion, et une buse latérale (10) reliant la cartouche au tube de venturi.

2. Dispositif selon la revendication 1, caractérisé en ce qu'un mélangeur statique (13) est disposé dans le tube de venturi en aval de la buse latérale.

## Claims

1. Device for cleaning vehicle windows comprising at least one disposable cartridge (12) of concentrated cleaning liquid, a reservoir of carrier liquid (1), at least one spray orifice (4) connected to the cartridge and to the reservoir by pipes (3, 5) and drawing means (2, 6) for drawing the concentrated cleaning liquid from a cartridge and the carrier liquid from the reservoir in order to mix them and convey the mixture to the spray orifice, characterised in that the drawing means comprise a suction pump (2), a venturi tube (6) disposed in series between the reservoir and the spray orifice, and a lateral nozzle (10) connecting the cartridge to the venturi tube.

2. Device according to Claim 1, characterised in that a static mixer (13) is disposed in the venturi tube downstream of the lateral nozzle.

## Patentansprüche

1. Vorrichtung zum Reinigen einer Kraftfahrzeugscheibe, umfassend wenigstens eine Wegwerfpatrone (12) mit konzentrierter Reinigungsflüssigkeit, einen Trägerflüssigkeitsbehälter (1), wenigstens eine mit der Patrone und dem Behälter über Leitungen (3, 5) verbundene Spritzöffnung (4) und Entnahmemittel (2, 6) für die Entnahme der konzentrierten Reinigungsflüssigkeit aus einer Patrone und der Trägerflüssigkeit aus dem Behälter, um sie zu mischen und die Mischung der Spritzöffnung zuzuleiten, **dadurch gekennzeichnet,** daß die Entnahmemittel eine Saugpumpe (2) und ein Venturirohr (6), die hintereinander zwischen dem Behälter und der Spritzöffnung angeordnet sind, sowie eine seitliche Düse (10) umfassen, welche die Patrone mit dem Venturirohr verbindet.

2. Vorrichtung nach Anspruch 1 , **dadurch gekennzeichnet,** daß ein statischer Mischer (13) im Venturirohr hinter der seitlichen Düse angeordnet ist.
